# EUROPEAN PATENT APPLICATION

(11) **EP 1 471 110 A1**
(43) Date of publication of application: **27.10.2004**
(21) Application number: 03009268.8
(22) Date of filing: 23.04.2003
(51) Int. Cl.: C08K 5/3475, C08G 63/189

(54) **Polyester composition reducing ultraviolet light penetration and a polyester bottle manufactured from said polyester composition**

(71) Applicant: NAN YA PLASTICS CORPORATION, Taipei (TW)
(72) Inventor: Jen, Zo-Chun, Tai-Shan Hsian, Taipei Hsien (TW)
(74) Representative: Reinhard - Skuhra - Weise & Partner GbR

(57) **Abstract**

This invention discloses a polyester composition having ultraviolet light penetration reduction characteristics use to manufacture polyester bottles. The polyester composition of this invention results from mixing preferably 10-1000 ppm of azimido-benzene ultraviolet absorbent with preferably 0.01 to 2 mol% of 2, 6-naphthalene dicarboxylate copolyester and pre-polymerized polyester of preferably over 98 mol%. Using precise concentration and mole ratios when forming the polyester composition of this invention is critical for reducing ultraviolet light penetration, and for keeping manufactured polyester bottles haze values to commercial acceptable levels.

## Description

### Background of the invention

This invention relates to a novel polyester composition having ultraviolet light penetration reduction characteristics use to manufacture polyester bottles. Specifically, this invention relates to a polyester composition comprising azimido-benzene (benzotriazole) ultraviolet absorbent, 2, 6 naphthalene dicarboxylate comonomer and pre-polymerized polyester. In addition to having ultraviolet penetration blocking characteristics, the polyester composition of this invention is capable of producing polyester bottles with haze values maintained at commercial acceptable levels.

### Prior arts

Polyester resins use to manufacture polyester bottles include, but are not limited to, polyethylene terephthalate ( "PET"), modified polyethylene terephthalate, polybutylene terephthalate ("PBT") and polytrimethylene terephthalate (PPT). PET is the most commonly used polyester. PET is used to manufacture packaging materials, polyester bottles for containing drinks/beverages, such as aerated water, fruit juice, tea and forms of other edible materials. PET is the polymer of choice because of its lightness as compared to other polymers, its remarkable elasticity, good storability and its light penetration prevention characteristics

### Problems to be solved

Generally most polyester containers, irrespective of its polymer constituents, when exposed to sunlight over a period of time will deteriorate and fade after absorbing ultraviolet light. Most food ingredients are photo-chemically influenced by ultraviolet light with wavelengths between 200∼ 380 nm To protect food ingredients from being altered photo-chemically, polymers used in the manufacture of packaging and bottles must absorb ultraviolet light with wavelengths between 200nm∼380nm. Most contemporaneous polyester packaging, containers and bottles, etc. do not absorb ultraviolet light between 200 nm -380nm. For example, PET, the most common polyester bottle ingredient, absorbs ultraviolet light below wavelengths less than 315 nm. Thus how to manufacture polyester bottles with ingredients capable of absorbing ultraviolet light with wavelengths between 315 ∼ 380nm is essential. To manufacture polyester bottles with ultraviolet absorbing characteristics, the traditional approach is to add ultraviolet absorbents into polyester compositions used to manufacture the bottles.

Ultraviolet absorbents can be divided into organic ultraviolet absorbents and inorganic ultraviolet absorbents. Examples of organic ultraviolet absorbents are salicylate, benzophenone, and azimido.benzene (benzotriazole). Organic absorbents utilize their individual resonance structures to absorb ultraviolet light of various wavelengths. Examples of inorganic absorbents are titanium dioxide, zinc oxide, ferric oxide and cerium oxide. In contrast to their organic counterparts, inorganic absorbents disperse and absorb ultraviolet rays by possessing the requisite particle sizes, having particles with high refractive index and particles with the requisite tinct characteristics.

Attempts have been made to manufacture polyester containers with ultraviolet hiding effect spanning wavelengths between 315 nm ∼ 380 nm. Japanese Patent Application Laid - Open No. 10-53696 discloses manufacturing polyester bottles with co-polyester containing naphthalene co-monomer, an organic absorbent, of 0.001 - 10 % weight. But absorption of ultraviolet light in naphthalene co-monomer was determined to be below 360nm wavelengths only, and thus will be unsuitable for protecting a wide range of beverages/drinks from deterioration caused by exposure to ultraviolet light. This is because the resonance structure of naphthalene with two benzene rings does not wholly absorb and reduce the penetration effect of ultraviolet rays.

Other attempts to manufacture polyester bottles with ultraviolet hiding effect above 360nm wavelengths teach the use of inorganic absorbents rather than organic absorbents. The usual approach is to add small amount of inorganic absorbents such as titanium dioxide, zinc oxide, ferric oxide and cerium oxide, etc. to a polyester composition. These inorganic absorbents are particles with sizes ranging from 0.01 to 2.0 µm. Although using inorganic particles of such small size will initially have favorable dispersion and absorption effect on ultraviolet light of wavelength over 360nm, overtime the inorganic particles will coagulate and reduce their original penetration hiding effect against ultraviolet light.

If particles between 0.01∼2.0 micrometers are used to manufacture thick polyester bottles, such as 0.355 millimeter thick polyester bottles, the addition level of the inorganic particles would have to exceed 1000ppm to compensate for the small inorganic absorbent particle sizes. The large use of inorganic particles in excess of 1000 ppm would increase the haze values of the polyester bottles manufactured.

It is an object of this invention to further improve the ultraviolet hiding effect of polyester bottles, while maintaining or lowering the haze value of the manufactured bottles.

Another object of this invention is to manufacture polyester bottles with a polyester composition comprising naphthalene, azimido-benzene and pre-polymerized polyester.

Still another object of this invention is to use critical mole and concentration ratios of naphthalene, azimodo-benzene and pre-polymerized polyester to form the polyester composition of this invention use to manufacture polyester bottles with reduced ultraviolet light penetration characteristics and with commercially acceptable haze value levels.

### Summary of the invention

This invention relates to a polyester composition use to manufacture polyester bottles with ultraviolet light penetration blocking characteristics. The polyester composition comprises naphthalene, azimodo-benzene and pre-polymerized polyester. In addition tohaving ultraviolet penetration blocking characteristics, the polyester composition of this invention is capable of producing polyester bottles with haze values maintained at commercial acceptable levels.

The polyester composition of this invention results from mixing preferably 10-1000 ppm of azimido-benzene ultraviolet absorbent with preferably 0.01 to 2 mol% of2, 6-naphthalene dicarboxylate comonomer and pre-polymerized polyester of preferably over 98 mol%.

Specifically, this invention uses Ciba Geigy Corporation's TINUVIN * 234 as the preferred organic absorbent of choice. Like other organic absorbents, TINUVIN * 234 absorbs ultraviolet rays by the use of its special resonance structure. The hydroxy (OH) group and the nitrogen (N) group of the TINUVIN * 234 absorbent form inner molecular hydrogen bonding, which causes resonance effect and absorb ultraviolet rays.

The process through which 2,6-naphthalene dicarboxylate and TINUVIN * 234 ultraviolet absorbent are added to the polyester composition begins with milling 2,6-naphthalene dicarboxylate into powder form and adding ethylene glycol (EG) to form a slurry.

### Detailed description of the invention

To produce polyester bottles capable of absorbing and reducing ultraviolet light penetration at variable wavelengths, the inventor repeated careful review and research, proposes to manufacture polyester bottles with polyester composition comprising naphthalene co-monomers and azimido-benzene ultraviolet absorbent. Polyester bottles manufactured with a polyester composition comprising naphthalene and azimido-benzene produced two significant results: bottles were found to drastically reduce ultraviolet light penetration; and their haze values were kept at a commercial acceptable levels.

A wide range of polyester resins can be used as starting materials for this invention. Generally polyester resins are produced from esterifying of a dibasic acid and a diol, or by transesterifying a diester such as dimethyl terephthalate (DMT) and a diol. The most used dibasic acid is terephthalic acid (TPA), modified or unmodified, and the most used diol is ethylene glycol (EG). It is well known that polyester resin compositions can consist of two or more dibasic acid and/or two or more diols. Example of dibasic acid ingredients that may be used to manufacture the polyester resin of this invention are iso-phthalic acid, succinic acid, glutaric acid, adipic acid, sebacic acid and/or mixtures of analog comprising any of the previously mentioned dibasic acids. Example of diol ingredients that may be used to manufacture the polyester resin of this invention are diethylene glycol, 1,3 - propane glycol, 1,4-butane glycol and/or mixture of analog of any of the previously mentioned diol.

A common method of manufacturing polyester resins for manufacturing polyester bottles , which is reacting terephthalic acid and ethylene glycol preferably between 210 to 240°C to form monomer and water. Water is continuously removed during reaction of the terephthalic acid with the ethylene glycol. During the reaction, a catalyst is not required because adding a catalyst will slightly speed up the reaction and reaction enhancement are not noticeable. However, addition of catalyst increases the undesired side product diethylene glycol (DEG). After finishing esterification of terephthalic acid and ethylene glycol, the reaction is subsequently subject to condensation reaction comprising a pre-polymerization reaction and a main polymerization reaction.

The pre-polymerization reaction occurs preferably between 270∼280°C and at an operating vacuum pressure preferably between 250∼15 mmHg. The main polymerization occurs preferably between 275 to 285°C and at an operating vacuum pressure preferably below 1 mmHg. At these preferred temperatures and pressures the polycondensation reaction is successfully performed. At the end of polycondensation of the PET melt phase, intrinsic viscosity (IV) value of PET polymer usually increases from about 0.5 to 0.7 dl/g. At this point, the polymer is uploaded to the cooling water bath for quick chilling and subsequently cut into cylindrical polyester chips.

In order to increase the intrinsic viscosity (IV) value of the PET polymer to obtain the desired polymer required to manufacture the polyester bottles, solid phase polymerization of the polyester chips is performed at 200°C in the presence of nitrogen gas atmosphere, which increases the IV value to between 0.7 to 1.1 dl/g, preferably between 0.72∼0.88 dl/g. If the temperature of the solid phase polymerization is lower than 200°C, the intrinsic viscosity (IV) value slowly increases or even not to proceed the solid phase polymerization. At temperature below 200°C, the chances of performing a successful solid phase polymerization reaction needed to produce the desired polymer films are greatly reduced. The next series of steps involve crystallizing and drying the polyester chips, molding the ester particles into parisons through the use of bottle blowing machine, and then blowing the polyester chips to obtain bottles of desired shapes.

Manufacturing polyester bottles from resin compositions -lacking ultraviolet protection - using traditional methods as discussed above render bottles' contents vulnerable to ultraviolet irradiation. To overcome the effect of ultraviolet radiation on polyester bottles' contents, this invention teaches mixing preferably 10-1000ppm of azimido-benzene ultraviolet absorbent with preferably 0.01 to 2 mol% of 2.6 - naphthalene dicarboxylate comonomer and with pre-polymerized polyester of preferably over 98 mol%. Using the precise composition ranges specified in this paragraph for manufacturing is critical for reducing ultraviolet light penetration through the manufactured polyester bottles, while keeping the manufactured polyester bottles haze value levels to a minimum.

The ultraviolet wave crest absorption wavelengths of naphthalene are located at 286nm and 312 nm, the hydrogen atom at its 2,6 position of naphthalene is replaced with COOCH₃ to form 2, 6- naphthalene dicarboxylate. When polyester composition containing 2, 6- naphthalene dicarboxylate is exposed to ultraviolet light, the ultraviolet wave crest absorption wavelengths of 2, 6- naphthalene dicarboxylate shift to 345nm and 365 nm. Thus, addition of small amount of naphthalene dicarboxylate in polyester synthesis results in a polyester composition capable of effectively absorbing ultraviolet light below wavelength 360 nm. Naphthalene dicarboxylate is easily linked into the molecular chain of the polyester resin during the polymerization process. The polyester composition containing naphthalene co-monomer is fused and blown molded to extend parallel along the bottles heading due to the molecular chain is the plane of dual benzene ring structure of the naphthalene, thereby maximizing the absorption hiding efficiency against ultraviolet irradiation.

To achieve even higher ultraviolet absorption efficiency, absorption above 360 nm wavelengths, this invention teaches the addition of organic ultraviolet absorbent, such as salicylate, benzophenone, and azimido-benzene (benzotriazole) etc into the polyester composition. These organic absorbents effectively absorb ultraviolet irradiation by the use of their special resonance structures. Through extensive research, the organic absorbent azimido-benzene has proven to be very effective against ultraviolet irradiation. Specifically, this invention uses Ciba Geigy Corporation's TINUVIN * 234 as the preferred organic absorbent of choice. Like other organic absorbents, TINUVIN * 234 absorbs ultraviolet irradiation by the use of its special resonance structure. The hydroxy (OH) group and the nitrogen (N) group of the TINUVIN * 234 absorbent form inner molecular hydrogen bonding, which causes resonance effect and absorb ultraviolet irradiation. The electric resonance plane of azimido-benzene is larger than that of other organic absorbents, such as salicylate and benzophenone, results in ultraviolet absorption along a wider wavelength spectrum. This invention has shown that mixing a small amount of TINUVIN * 234, between 10 and 1000ppm, with polyester to form a polyester resin composition was effective against ultraviolet irradiation below wavelengths of 360nm. The polyester resin composition containing TIIVWIN * 234 was not as effective against ultraviolet irradiation below wavelengths of 360 nm, as compared with polyester resin composition containing 0.01∼2 mol% naphthalene co-monomer. However, the reverse was determined to be true when tested against ultraviolet irradiation above wavelengths of 365nm.

The inventor has discovered that by mixing both naphthalene co-monomer and organic ultraviolet absorbent TINUVIN * 234 with polyester resin to form a polyester composition, it was indeed possible to drastically reduce ultraviolet penetration below 360nm and above 360nm without increasing the haze value of the polyester composition.

The addition level of the 2,6 - naphthalene dicarboxylate to the polyester composition should be between 0.01 and 2.0 mol %, preferably between 0.1 nd 1.0 mol %. When the addition level of 2,6 - naphthalene dicarboxylate falls below 0.1% mol, the ultraviolet hiding effect for wavelengths below 360nm is not apparent. When the addition level of 2,6 - naphthalene dicarboxylate is above 1.0% mol, the ultraviolet hiding effect for wavelength below 360nm is moderate at best.

The addition level of the TINUVIN * 234 to the polyester composition should be between 10-1000 ppm, preferably between 200 - 500 ppm. When the addition level of TINUVIN *234 is below 200 ppm, the ultraviolet hiding effect for wavelengths above 370 nm is not apparent. When the addition level of TINUVIN * 234 is above 500 ppm, the ultraviolet hiding effect for wavelengths below 370nm is moderate at best.

The process through which 2,6-naphthalene dicarboxylate is added to the polyester composition begins with the milling of 2,6-naphthalene dicarboxylate into powder form and adding ethylene glycol (EG) to form a 25 wt % slurry, which is then poured into a reaction vessel by means of gear pumps. The slurry containing 2,6-naphthalene dicarboxylate can be added into the polyester process during the slurry preparation of the diacid and glycol or during the esterification reaction process. Similarly, the TINUVIN * 234 absorbent is added to ethylene glycol (EG) to form 15 wt % slurry, and then poured into a reaction vessel via gear pump. The slurry containing TINUVIN * 234 absorbent can be added into the polyester process during the slurry preparation of the diacid and glycol or during the esterification reaction process..

Different additive such as thermal stabilizer, light stabilizer, dye, colorant, plasticizer, antioxidant, infra red absorbents and anti-ultraviolet agents, and UV-resistant agent, etc. can be added into the polyester composition of this invention.

The instrument used to measure the ultraviolet penetration analysis of the polyester bottle pieces is the ultraviolet spectrometer model SHIMADZU UV 2101PC. Scan and measure the ultraviolet penetration rate of wavelength 300∼400nm.

The instrument used to measure the haze value level is the color and color difference meter, model 1001 DP manufactured by NIPPON DENSHOKU KOGYO CO. LTD.

By way of examples, the manufacturing processes, conditions and process components, though not limited to the examples, of the present invention may be as follows:

### Examples

### (Example 1)

PET oligomer 12.11 Kg and EG 3.87 Kg are added into an electric heated stainless steel 30 litre reactor, agitated and heated under atmosphere to 260°C, and EG in the amount of 1200-1400 ml is collected. Before the polycondensation reaction, the following ingredients are subsequently added: condensation catalyst of 450 ppm antimony acetate, 140 ppm cobalt acetate, 0.25mol % 2,6- naphthalene dicarboxylate and 300ppm TINUVIN*234 organic ultraviolet absorbent.

Next, the reactor is vacuumed to pressures below 1 mmHg to perform the pre-polymerization reaction at a temperature of 270°C, and to subsequently perform the main polymerization reaction at 280°C to produce the co-polyester resins. During this process, the intrinsic viscosity of the co-polyester is controlled between 0.6 - 0. 64dl/g. The resulting polymer is cut into chips, dried and crystallized for 6 hours under 180°C nitrogen atmosphere. The resulting mixture undergoes solid phase polycondensation reaction at reaction temperature of 225°C for 20 hours and with an intrinsic viscosity between 0.76 - 0.86 dl/g. After the solid phase polycondensation process, the polyester chips are processed into polyester bottles by 280°C injection molding machine.

### [Example 2-3]

These examples are similar to Example 1, except that adjustments are made to the addition level of 2,6-naphthalene dicarboxylate and TINUVIN*234. See table 1 for results below.

### (Comparative Example 1)

PET oligomer 12.11 Kg and EG 3.87 Kg are added into an electric heated stainless steel 30 litre reactor, agitated and heated under atmosphere to 260°C; and EG in the amount of 1200-1400ml is collected. Before the polycondensation reaction, the following ingredients are subsequently added: polycondensation catalyst of 450 ppm antimony acetate, 140 ppm cobalt acetate.

Next, the reactor is vacuumed to pressures below 1 mmHg to perform the pre-polymerization reaction at a temperature of 270°C, and to perform subsequently the main polymerization reaction at 280°C to produce the co-polyester resins. During this process, the intrinsic viscosity of the co-polyester is controlled between 0.6 - 0.64dl/g. The resulting polymer is cut into granules, dried and crystallized for 6 hours under 180°C nitrogen atmosphere. The resulting mixture undergoes solid phase polycondensation reaction at reaction temperature of 225°C for 20 hours and with an intrinsic viscosity between 0.76 - 0.86 dl/g. After the solid polycondensation process, the polyester chips are processed into polyester bottles by 280°C injection molding machine

### (Comparative Example 2)

PET oligomer 12.11 Kg and EG 3.87 Kg are added into an electric heated stainless steel 30 litre reactor, agitated and heated under atmosphere to 260°C, and EG in the amount of 1200-1400ml is collected. Before the olycondensation reaction, the following ingredients are subsequently added: polycondensation catalyst of 450 ppm antimony acetate, 140 ppm cobalt acetate, and 0.25mol % 2,6- naphthalene dicarboxylate. Next, the reactor is vacuumed to pressures below 1 mmHg to perform the pre-polymerization reaction at a temperature of 270°C, and to subsequently perform the main polymerization reaction at 280°C to produce the co-polyester resins. During this process, the intrinsic viscosity of the co-polyester is controlled between 0.6 - 0.64dl/g. The resulting polymer is cut into chips, dried and crystallized for 6 hours under 180°C nitrogen atmosphere. The resulting mixture undergoes solid phase polycondensation reaction at reaction temperature of 225°C for 20 hours and with an intrinsic viscosity between 0.76 - 0.86 dl/g. After the solid phase polycondensation process, the polyester chips are processed into polyester bottles by 280°C injection molding machine.

### (Comparative Examples 3-6)

The operation is similar to example 2, except that the addition levels of 2,6-naphthalene dicarboxylate and TINUVIN*234 are adjusted. See table 1 results below.

From table 1 below, it is observed that addition of 0.25 mol % 2,6- naphthalene dicarboxylate alone to the polyester composition had little effect on ultraviolet radiation over 360nm wavelengths. Similarly, addition of TINUVIN*234 alone had poor hiding effect against ultraviolet radiation above and at 360 nm wavelengths. In contrast, the polyester bottle slightly mixed with 2,6 - naphthalene dicarboxylate and TINUVIN *234 drastically reduced ultraviolet penetration; while maintaining haze value levels at a minimum.

### (Comparative Example 7)

Except for adding 0.25mol% of 2,6-naphthalene dicarboxylate and 50 ppm of 20nm ferric oxide inorganic ultraviolet absorbent to instead of adding TINUVIN*234, comparative example 7 is similar to example 1. See table 2 for results below.

### (Comparative Example 8)

Comparative example 8 is similar to Comparative example 7, except that the addition level of the 20nm ferric oxide inorganic ultraviolet absorbent is 100ppm instead of 50 ppm. See table 2 for results below.

### (Comparative Example 9)

Comparative example 9 is similar to Comparative example 7, except that the particle size and addition level of the ferric oxide inorganic ultraviolet absorbent are 0.27 µm and 200 ppm respectively. See table 2 for results below.

From table 2, the smaller the size of inorganic absorbent particles added to the polyester composition mixed with 0.25% mol of 2,6-naphthalene dicarboxylate, the higher the absorbent addition level added. Increased addition level of the inorganic absorbent results in secondary coagulation, reduces penetration effect against ultraviolet radiation and results in higher haze values.

**Table 1**

| | 2,6-Naphthalene dicarboxylate (NDC) mol% | Addition level of TINUVIN * 234 ppm | Haze | Ultraviolet penetration rate | Ultraviolet penetration rate | Ultraviolet penetration rate |
|---|---|---|---|---|---|---|
| | | | | T% at 360nm | T% at 370nm | T% at 380nm |
| Example 1 | 0.25 | 300 | 0.7 | 6.5 | 47.5 | 66.5 |
| Example 2 | 0.25 | 500 | 0.4 | 9.7 | 47.4 | 64.3 |
| Example 3 | 0.50 | 500 | 0.4 | 2.4 | 38.0 | 61.6 |
| Comparative example 1 | 0 | 0 | 1.1 | 70.8 | 78.4 | 81.6 |
| Comparative example 2 | 0.25 | 0 | 1.1 | 15.0 | 69.2 | 80.5 |
| Comparative example 3 | 0 | 300 | 1.6 | 50.2 | 60.5 | 68.6 |
| Comparative example 4 | 0 | 600 | 0.4 | 37.3 | 47.3 | 59.0 |
| Comparative example 5 | 0.25 | 100 | 0.4 | 15.6 | 63.8 | 75.7 |
| Comparative example 6 | 0.10 | 500 | 0.4 | 25.4 | 56.2 | 67.6 |

**Table 2**

| | 2,6-Naphthalene dicarboxylate (NDC) mol% | Ferroferric oxide | | Haze | Ultraviolet penetration rate | Ultraviolet penetration rate | Ultraviolet penetration rate |
|---|---|---|---|---|---|---|---|
| | | Addition level ppm | Particle size | | T% at 360nm | T% at 370nm | T% at 380nm |
| Comparative example 7 | 0.25 | 50 | 20 nm | 1.1 | 14.1 | 63.1 | 74.8 |
| Comparative example 8 | 0.25 | 100 | 20 nm | 1.5 | 14.1 | 61.2 | 71.8 |
| Comparative example 9 | 0.25 | 200 | 0.27µm | 9.4 | 13.0 | 58.3 | 69.8 |

### The present invention comprises the following preferred embodiments:

1. An UV-resistant polyester composition capable of being blown molded into polyester bottles/vessels of desired shapes comprising:
   (a) azimido-benzene ultraviolet absorbent; and
   (b) copolyester
2. The UV-resistant polyester composition according to embodiment 1, wherein said ultraviolet absorbent concentration added to said copolyester is between 10-1000ppm.
3. The UV-resistant polyester composition according to embodiment 2, wherein said copolyester comprises 2,6 - naphthalene dicarboxylate and prepolymerized polyester.
4. The UV-resistant polyester composition according to embodiment 3, wherein said prepolymerized polyester comprises polyethylene terephthalate and modified polyethylene terephthalate.
5 The UV-resistant polyester composition according to embodiment 4, wherein said 2, 6-naphthalene dicarboxylate is between 0.01 to 2 mol% of the copolyester.
6. The UV-resistant polyester composition according to embodiment 4, wherein said prepolymerized polyester constitutes over 98% mol of the copolyester.
7. The UV-resistant polyester composition according to embodiment 4 wherein said 2,6-naphthalene dicarboxylate addition level to form the copolyester is between 0.01 to 2 mol% and said prepolymerized polyester addition level to form the copolyester is over 98 mol% respectively.
8. The UV-resistant polyester composition according to embodiment 7, wherein said 2,6-naphthalene addition level is between 0.1-1.0 mol%.
9. The UV-resistant polyester composition according to embodiment 4, wherein said 2,6-naphthalene dicarboxylate in-process mixture comprises 25 wt % milled 2,6-naphthalene dicarboxylate and ethylene glycol slurry.
10. The UV-resistant polyester composition according to embodiment 5, wherein said 2,6-naphthalene dicarboxylate in-process mixture comprises 25 wt% milled 2,6-naphthalene dicarboxylate and ethylene glycol slurry.
11. The UV-resistant polyester composition according to embodiment 6, wherein said 2,6 naphthalene dicarboxylate in-process mixture comprises 25 wt % milled 2,6-naphthalene dicarboxylate and ethylene glycol slurry.
12. The UV-resistant polyester composition according to embodiment 7, wherein said 2,6-naphthalene dicarboxylate in-process mixture comprises 25wt% milled 2,6-naphthalene dicarboxylate and ethylene glycol slurry.
13. The UV-resistent polyester composition according to embodiment 8, wherein said dicarboxylate in-process mixture comprises 25wt% milled 2,6- naphthalene dicarboxylate and ethylene glycol slurry.
14. The UV∼resistant polyester composition according to embodiment 1, wherein said ultraviolet absorbent is Ciba Geigy's TINUVIN * 234.
15. The UV-resistant polyester composition according to embodiment 12, wherein said ultraviolet absorbent is Ciba Geigy's TINUVIN * 234.
16. The UV-resistant polyester composition according to embodiment 14, wherein the addition level of TINUVIN* 234 is between 200 to 500 ppm.
17. The UV-resistant polyester composition according to embodiment 15, wherein the addition level of TINUVIN * 234 is between 200 to 500 ppm.
18. The UV-reisistant polyester composition according to embodiment 17, wherein said composition further comprises antioxidant, organic pigment and infrared absorbent.
19. The UV-resistant polyester composition according to embodiment 18, wherein the 2,6-naphthalene dicarboxylate slurry is added to the copolyester during mixing of naphthalene diacid and glycol or the during the esterification reaction.
20. The UV-resistant polyester composition according to embodiment 16, wherein said composition further comprises antioxidant, organic pigment and infrared absorbent.

## Claims

1. An UV-resistant polyester composition capable of being blown molded intopolyester bottles/vessels of desired shapes comprising:
(a) azimido-benzene ultraviolet absorbent; and
(b) copolyester

2. The UV-resistant polyester composition according to claim 1, wherein said ultraviolet absorbent concentration added to said copolyester is between 10- 1000ppm, and/or wherein said copolyester comprises 2,6 - naphthalene dicarboxylate and prepolymerized polyester.

3. The UV-resistant polyester composition according to claim 2, wherein said pre-polymerized polyester comprises polyethylene terephthalate and modifiedpolyethylene terephthalate

4. The UV-resistant polyester composition according to one or more of the preceding claims, wherein said 2, 6-naphthalene dicarboxylate is between 0.01 to 2 mol% of the copolyester, and/or wherein said prepolymerized polyester constitutes over 98% mol of the copolyester.

5. The UV-resistant polyester composition according to one or more of the preceding claims, wherein said 2,6-naphthalene dicarboxylate addition level to form the copolyester is between 0.01 to 2 mol% and said prepolymerized polyester addition level to form the copolyester is over 98 mol% respectively, and/or wherein said 2,6-naphthalene addition level is between 0.1-1.0 mol%.

6. The UV-resistant polyester composition according to one or more of the preceding claims, wherein said 2,6-naphthalene dicarboxylate in-process mixture comprises 25 wt % milled 2,6-naphthalene dicarboxylate and ethylene glycol slurry

7. The UV∼resistant polyester composition according to one or more of the preceding claims, wherein said ultraviolet absorbent is Ciba Geigy's TINUViN * 234.

8. The UV-resistant polyester composition according to claim 7, wherein the addition level of TINUVIN* 234 is between 200 to 500 ppm.

9. The UV-reisistant polyester composition according to one or more of the preceding claims, wherein said composition further comprises antioxidant, organic pigment and infrared absorbent.

10. The UV-resistant polyester composition according to one or more of the preceding claims, wherein the 2,6- naphthalene dicarboxylate slurry is added to the copolyester during mixing of naphthalene diacid and glycol or the during the esterification reaction.
